# EUROPEAN PATENT APPLICATION

(11) **EP 3 048 516 A1**
(43) Date of publication of application: **27.07.2016**
(21) Application number: 14846719.4
(22) Date of filing: 17.09.2014
(51) Int. Cl.: G06F 3/0481, G06F 3/0488

(54) **ELECTRONIC DEVICE, METHOD FOR CONTROLLING ELECTRONIC DEVICE, AND STORAGE MEDIUM**

(30) Priority: 20.09.2013 JP 2013194996
(71) Applicant: NEC Solution Innovators, Ltd., Tokyo 136-8627 (JP)
(72) Inventor: NAKAO, Yusuke, Tokyo 136-8627 (JP)
(74) Representative: Vossius & Partner Patentanwälte Rechtsanwälte mbB
(86) International application number: PCT/JP2014/004782
(87) International publication number: WO 2015/040861

(57) **Abstract**

This invention addresses the problem of providing a new means for focusing a desired input field. This electronic device (10) has the following: a display unit (11) that displays, on a display, an input screen that contains a plurality of focus targets, only one of which can be focused at a time; a focus-position determination unit (12) that determines which of the focus targets to focus; and an input acceptance unit (13) that accepts inputted direction information that indicates a direction. If the input acceptance unit (13) accepts inputted direction information while a first focus target is focused, the focus-position determination unit (12) changes the focus position from the first focus target to another focus target on the basis of that direction information.

## Description

### [Technical Field]

The present invention relates to an electronic device, a method for controlling an electronic device, and a storage medium.

### [Background Art]

When performing an input operation on an input screen including a plurality of input fields (such as text fields), a user performs an operation of placing focus on a desired input field. Subsequently, the user performs an input operation on the focused input field.

As an operation of placing focus on a desired input field, such a method described below is widely known. That is, as an operation of placing focus on an input field, there is a method of moving focus to a desired input field by use of a TAB key on a keyboard (refer to PTL 1). Also, as an operation of placing focus on an input field, there is a method of positioning a cursor of a mouse to a desired input field and, clicking the mouse (such as left click). Further, in a case that an operation terminal is equipped with a touch panel, there is a method of touching a desired input field, as an operation of placing focus on an input field.

### [Citation List]

### [Patent Literature]

[PTL 1] Japanese Unexamined Patent Application Publication No. 2009-282961

### [Summary of Invention]

### [Technical Problem]

A main object of the present invention is to provide new method for placing focus on a desired input field.

### [Solution to Problem]

According to the present invention, an electronic device including: display means for displaying, on a display, an input screen including a plurality of focus targets that are able to be alternatively focused; focus position determination means for determining which focus target, among a plurality of the focus targets, to be focused; and input acceptance means for accepting input of direction information indicating a direction, wherein, the focus position determination means changes a focus position from a first focus target to another focus target, in accordance with the direction information, when the input acceptance means accepts input of the direction information with the first focus target being focused, is provided.

Also, according to the present invention, a method for controlling an electronic device by a computer is provided. The method includes: displaying, by the computer, on a display, an input screen including a plurality of focus targets that are able to be alternatively focused; and determining by the computer, which focus target, among a plurality of the focus targets, to be focused, when accepting input of direction information indicating a direction with a first focus target being focused, by changing a focus position from the first focus target to another focus targets, in accordance with the direction information.

Also, according to the present invention, a computer-readable storage medium recording a program is provided. The program, recoded in the storage medium, causes a computer to execute: processing of displaying, on a display, an input screen including a plurality of focus targets that are able to be alternatively focused; and processing of determining which focus target, among a plurality of the focus targets, to be focused, when accepting input of direction information indicating a direction with a first focus target being focused, by changing a focus position from the first focus target to another focus targets, in accordance with the input direction information.

### [Advantageous Effects of Invention]

The present invention provides new method for placing focus on a desired input field.

### [Brief Description of Drawings]

[Fig. 1] Fig. 1 is a diagram conceptually illustrating an example of a hardware configuration of an electronic device according to exemplary embodiment of the present invention.
[Fig. 2] Fig. 2 is a diagram illustrating an example of a functional block diagram of the electronic device according to exemplary embodiment of the present invention.
[Fig. 3] Fig. 3 is a diagram illustrating an example of an input screen displayed by a display unit according to exemplary embodiment of the present invention.
[Fig. 4] Fig. 4 is a diagram illustrating an example of an input screen displayed by the display unit according to exemplary embodiment of the present invention.
[Fig. 5] Fig. 5 is a diagram illustrating an example of information available to an input acceptance unit according to exemplary embodiment of the present invention.
[Fig. 6] Fig. 6 is a diagram illustrating an example of an input screen displayed by the display unit according to exemplary embodiment of the present invention.
[Fig. 7] Fig. 7 is a diagram illustrating an example of an input screen displayed by the display unit according to exemplary embodiment of the present invention.

### [Description of Embodiments]

First, an example of a hardware configuration of an electronic device according to the present exemplary embodiment will be described.

The electronic device according to the present exemplary embodiment may be a portable apparatus or a stationary apparatus. Each unit included in the electronic device according to the present exemplary embodiment is implemented by any combination of hardware and software, mainly on any computer, including a central processing unit (CPU), a memory, a program loaded into a memory, a storage unit, such as a hard disk, storing the program, and a network connection interface. The program described above includes a program downloaded from a storage medium such as a compact disc (CD), a server connected to the Internet, and the like, in addition to a program stored in a memory beforehand from a shipping stage. It should be understood by those skilled in the art that various modifications can be made to the implementation method or the apparatus.

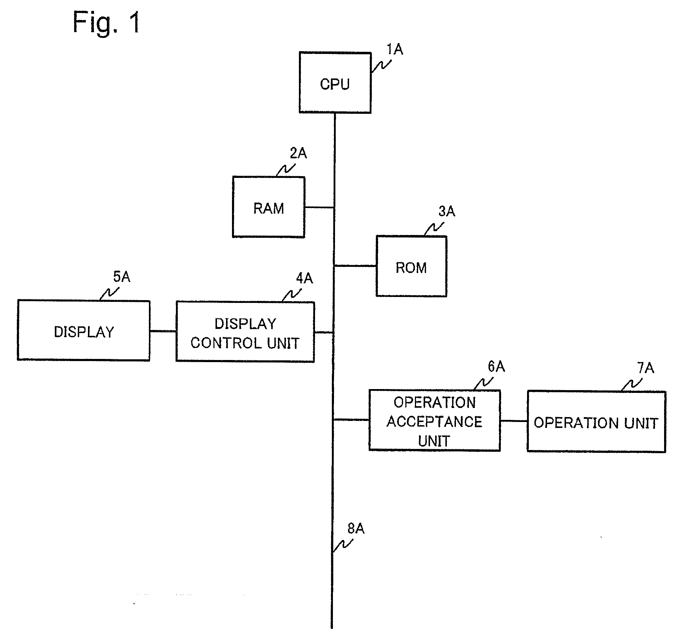

Fig. 1 is a diagram conceptually illustrating an example of a hardware configuration of the electronic device according to the present exemplary embodiment. As illustrated, an apparatus according to the present exemplary embodiment includes, for example, a CPU 1A, a random access memory (RAM) 2A, a read only memory (ROM) 3A, a display control unit 4A, a display 5A, an operation acceptance unit 6A, an operation unit 7A, and the like, interconnected by a bus 8A. Although not being illustrated, the apparatus according to the present exemplary embodiment may include an additional element, such as an input/output interface (I/F) connected to an external device in a wired manner, a communication unit for communicating with an external device in a wired and/or wireless manner, a microphone, a speaker, a camera, and auxiliary storage device.

The CPU 1A controls an entire computer in the electronic device along with each element. The ROM 3A includes an area storing a program for operating the computer, various application programs, various setting data used when those programs operate, and the like. The RAM 2A includes an area temporarily storing data, such as a work area for program operation.

The display 5A includes a display device such as a light emitting diode (LED) indicator, a liquid crystal display, and an organic electro luminescence (EL) display. The display 5A may be a touch panel display integrated with a touch pad. The display control unit 4A reads data stored in a video RAM (VRAM). The display control unit 4A performs a predetermined process on the read data, and, subsequently transmits the data to the display 5A for various kinds of screen display. The operation acceptance unit 6A accepts various operations via the operation unit 7A. The operation unit 7A includes an operation key, an operation button, a switch, a jog dial, a touch panel display, and the like.

The present exemplary embodiment will be described below. A functional block diagram used in the following description of the exemplary embodiment illustrates blocks on a functional basis instead of configurations on a hardware basis. Although each device is described as being implemented on one apparatus in the drawings, the implementation method is not limited thereto. That is, a configuration of the apparatus according to the present exemplary embodiment may be a physically separated configuration or a logically separated configuration.

### <First exemplary embodiment>

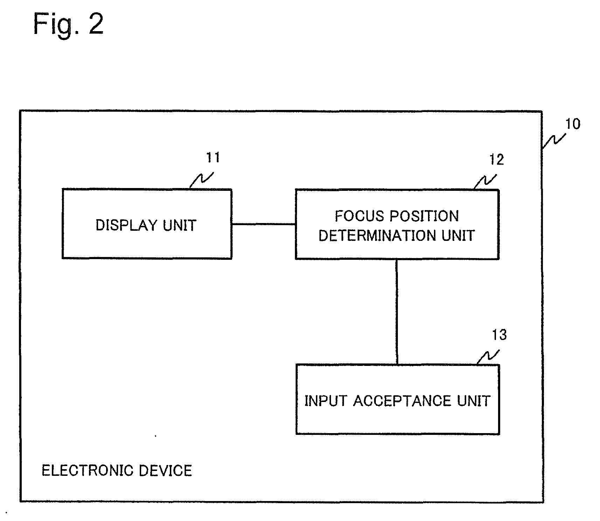

Fig. 2 illustrates an example of a functional block diagram of an electronic device 10. As illustrated, the electronic device 10 includes a display unit 11, a focus position determination unit 12, and an input acceptance unit 13. Each unit will be described below.

The display unit 11 displays, on a display, an input screen including a plurality of focus targets which can be focused alternatively. The focus target is, for example, an input field configured by using Graphical User Interface (GUI) parts, such as a text field and a drop-down menu.

The display according to the present exemplary embodiment is a touch panel display. The touch panel display may be implemented by any type, and all types, including a resistive film type, surface acoustic wave type, an infrared type, an electromagnetic induction type, and an electrostatic capacitance type are adoptable as the touch panel.

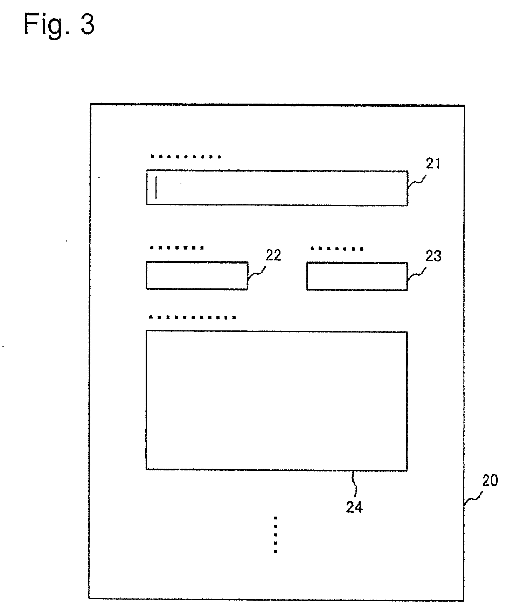

Fig. 3 illustrates an example of an input screen displayed on a touch panel display 20 by the display unit 11. The input screen includes a plurality of input fields 21 to 24.

The display unit 11 displays, on the display, for example, an input screen created by a predetermined application installed on the electronic device 10. Alternatively, the display unit 11 displays, on the display, an input screen obtained from an external device via a network such as the Internet, by a predetermined application installed on the electronic device 10.

Returning to Fig. 2, the input acceptance unit 13 accepts input of direction information that indicates a direction. For example, the input acceptance unit 13 accepts input of direction information through a touch operation of sliding a touch position in a predetermined direction (e.g. a swipe operation or a flick operation). When detecting a touch operation of sliding a touch position in a predetermined direction, the input acceptance unit 13 recognizes the direction. Then, the input acceptance unit 13 creates direction information indicating the recognized direction. The focus position is changed in accordance with the direction information. There is an input screen configured to change a part to be displayed on the touch panel display 20 by sliding the input screen through a swipe operation or a flick operation. In such a case, in order to distinguish a touch operation for sliding the input screen and an input operation of direction information, the input acceptance unit 13 may, for example, accept input of direction information through an operation as described below. That is, the input acceptance unit 13 may, for example, accept input of direction information through a touch operation that touch and slides another position in a predetermined direction, while touching-and-holding any position on the touch panel display 20.

In this case, the input acceptance unit 13 recognizes the slide direction of the operation that touches and slides another position in the predetermined direction, and creates direction information indicating the recognized direction.

The direction information may, for example, indicate a direction in a range of 0 degrees to 360 degrees. In this case, a predetermined direction is a direction of 0 degrees. Or, the direction information may also indicate any of a predetermined number of directions such as "up, upper-right, right, lower-right, down, lower-left, left, and upper-left." In this case, when recognizing a direction through a touch operation, the input acceptance unit 13 selects one direction closest to the recognized direction out of the above described predetermined number of directions. Then, the input acceptance unit 13 creates direction information indicating the selected direction.

The focus position determination unit 12 determines a focus target which is focused on, among a plurality of focus targets. Specifically, the focus position determination unit 12 determines a focus target that is focused on, in accordance with an input operation by a user. For example, it is assumed that a user performs a touch operation of touching the input field 21 in the input screen illustrated in Fig. 3. Then, the focus position determination unit 12 determines to focus on the input field 21. Consequently, the display unit 11 displays the input screen with the input field 21 being focused, as illustrated in Fig. 3.

When the input acceptance unit 13 accepts input of direction information with a first focus target being focused, the focus position determination unit 12 changes the focus position from the first focus target to another focus target, in accordance with the direction information. Then, the display unit 11 displays the input screen in a state that the changed focus position, determined by the focus position determination unit 12, is focused.

For example, the focus position determination unit 12 changes the focus position to another focus target located ahead of the first focus target, on the input screen, in a direction indicated by the direction information. As an example, the focus position determination unit 12 may change the focus position to, for example, a focus target existing at a position that meets (overlaps) the first focus target when the first focus target, that is focused, is moved in a direction indicated by direction information. Or, the focus position determination unit 12 may also change the focus position to, for example, a focus target existing at a position that meets (overlaps) a representative point (such as a center point and an upper-left corner) in a field occupied by a focused first focus target when the representative point is moved in a direction indicated by direction information.

An example will be described by use of Fig. 3. For example, it is assumed that a user performs a touch operation of sliding s a touch position in a downward direction with focus placed on the input field 21 as illustrated in Fig. 3. Then, the input acceptance unit 13 creates direction information indicating the direction and provides the information to the focus position determination unit 12. The focus position determination unit 12 determines a focus position, in accordance with the acquired direction information. For example, the focus position determination unit 12 changes the focus position to an input field existing at a position that meets (overlaps) the focused input field 21 when the input field 21 is moved in a downward direction indicated by the direction information. In this example, the input fields 22 to 24 are candidates for a destination to which the focus position is moved.

When there are a plurality of candidate input fields, like this example, the focus position determination unit 12 may, for example, place focus on an input field located closest from the current focus position. Further, when there are a plurality of the closest input fields, the focus position determination unit 12 may, for example, place focus on an input field located at the leftmost position on the input screen. In accordance with the aforementioned assumption, when a user performs a touch operation of sliding the touch position in a downward direction with focus placed on the input field 21 as illustrated in Fig. 3, the focus position moves to the input field 22. Further, in this situation, when the user performs a touch operation of sliding the touch position in a downward direction, the focus position moves to the input field 24. On the other hand, when the user performs a touch operation of sliding the touch position in a rightward direction with the input field 22 being focused, the focus position moves to the input field 23. Further, when the user performs a touch operation of sliding the touch position in an upward direction with the input field 22 being focused, the focus position moves to the input field 21.

The aforementioned present exemplary embodiment provides new methods for placing focus on a desired input field. Specifically, the electronic device 10 according to the present exemplary embodiment is capable of determining and changing a focus position, in accordance with direction information accepted from a user. The position of focus being focused on a focus target moves to another focus target existing at a position ahead of the focus target being focused, in a direction indicated by the direction information. Therefore, the user is able to readily and intuitively understand an operation and a result of the operation (change in the focus position). Consequently, user operability is improved, and efficiency of user input work is expected be improved.

### <Second exemplary embodiment>

An electronic device according to the present exemplary embodiment is based on a configuration according to the first exemplary embodiment, and is different from the first exemplary embodiment in a configuration that the device accepts input of length information in addition to direction information from a user, and determines a focus position by use of these pieces of information. An example of a functional block diagram of the electronic device 10 according to the present exemplary embodiment is illustrated in Fig. 2, similarly to the first exemplary embodiment.

The input acceptance unit 13 accepts input of length information indicating length in addition to direction information. For example, the input acceptance unit 13 accepts input of direction information and length information through a touch operation of sliding a touch position in a predetermined direction (e.g. a swipe operation and a flick operation). When detecting a touch operation of sliding a touch position in a predetermined direction, the input acceptance unit 13 recognizes the direction. Then, the input acceptance unit 13 creates direction information indicating the recognized direction. Further, the input acceptance unit 13 recognizes a distance that the touch position has slid (moved) on the touch panel display 20 (a slide distance). Then, the input acceptance unit 13 creates length information indicating the recognized distance.

The focus position determination unit 12 accepts input of direction information and length information from the input acceptance unit 13 with a first focus target being focused. In this case, the focus position determination unit 12 changes the focus position from the first focus target to another focus target, in accordance with the accepted direction information and length information.

For example, the focus position determination unit 12 changes the focus position to another focus target located ahead of the first focus target, on the input screen, in a direction indicated by the direction information. Then, when there are a plurality of other focus targets located ahead of the first focus target in the direction indicated by the direction information, the focus position determination unit 12 changes the focus position to a focus target, of which distance from the first focus target is close to the length indicated by the length information.

The distance between focus targets can be, for example, a distance between respective representative points (such as center points or upper-left corners) in areas occupied by the respective focus targets. The distance between focus targets changes depending on a magnification of display scaling on the input screen. The focus position determination unit 12 is capable of calculating a distance between focus targets, in accordance with a magnification of display scaling at the point of the input acceptance unit 13 accepting input of length information.

For example, it is assumed that a user performs a touch operation of sliding the touch position in a downward direction from the vicinity of the input field 21 to the vicinity of the input field 24, in the state that the input field 21 is focused, as illustrated in Fig. 3. Then, the input acceptance unit 13 creates direction information indicating the direction and length information indicating the slide distance, and provides the information to the focus position determination unit 12. The focus position determination unit 12 determines the focus position, in accordance with the acquired direction information and length information. In this example, the focus position determination unit 12 moves the focus position to the input field 24 of which distance from the input field 21 is closest to the length indicated by the length information, out of the input fields 22 to 24, which are located in a downward direction from the input field 21.

The present exemplary embodiment described above is able to provide an advantageous effect similar to the first exemplary embodiment. Further, a focus position can be changed by use of length information that can be input by a user, and therefore the user is able to more easily move the focus position to a desired focus target. Consequently, user operability is improved, and efficiency of user input work is expected to be improved.

### <Third exemplary embodiment>

An electronic device according to the present exemplary embodiment is based on a configuration according to the first and second exemplary embodiments. The electronic device according to the present exemplary embodiment is different from the first and second exemplary embodiments in that the device accepts at least one of direction information and length information, through a touch operation in a predetermined partial area along the circumference of the touch panel display 20. Processing of determining and changing a focus position by use of accepted direction information and length information, by the electronic device according to the present exemplary embodiment, is similar to the first and second exemplary embodiments. An example of a functional block diagram of the electronic device 10 according to the present exemplary embodiment is illustrated in Fig. 2, similarly to the first and second exemplary embodiments.

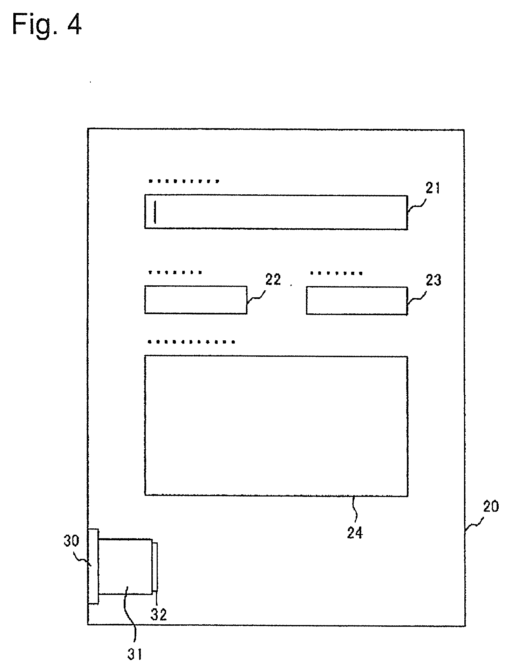

An example will be described by use of Fig. 4. As illustrated in Fig. 4, the display unit 11 is capable of displaying a touch field 31 overlapped on the input screen. The touch field 31 is displayed along the circumference of the touch panel display 20. A size of the touch field 31 may be determined to fit a human thumb with some room for the thumb to slide. Or, the size of the touch field 31 may be determined to fit a human thumb covered with a glove or a work glove with some room for the thumb to slide. Creating and displaying of an image of the touch field 31 may be performed by an application creating the input screen, by a different application, by middleware, or by an operating system.

A user performs an operation of inputting at least one of direction information and length information in the touch field 31 for changing a focus position. For example, a user is able to put the left thumb on the touch field 31 to perform a touch operation with the left hand holding a lower part of the electronic device 10. In this case, the user is able to perform an input operation on a focused input field with the right hand, while performing an operation of changing the focus position with the left hand. The electronic device according to the present exemplary embodiment may accept an operation other than an operation of changing the focus position in the touch field 31. For example, an operation of tapping or double-tapping the touch field 31 may be accepted as an operation of tapping or double-tapping an input field that is focused at the time.

When accepting an input operation of sliding a touch position by a first length in the touch field 31, the input acceptance unit 13 accepts the input as length information indicating a second length obtained by extending, in accordance with a predetermined rule, the first length. The input acceptance unit 13 may handle the input operation of sliding a touch position by the first length in the touch field 31 as input of length information indicating the second length described above. Such a predetermined rule is not particularly limited, and the rule may be, for example, multiplying the first length by M (where M is a real number greater than one). Thus, it becomes possible to input length information corresponding to any distance between a plurality of input fields displayed on the input screen, in a limited space of the touch field 31, is enabled. Further, it becomes possible to input of length information corresponding to any distance between a plurality of input fields displayed on the input screen, by a thumb, of which movable distance is limited, of the hand holding the electronic device 10.

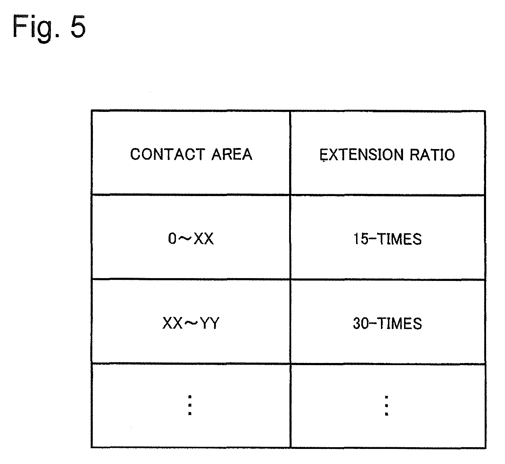

The input acceptance unit 13 may further change a degree of extension of the first length depending on a size of an area of touch in the touch field 31. For example, the input acceptance unit 13 may hold information illustrated in Fig. 5. Then, the input acceptance unit 13 may determine a degree of extension of the first length, in accordance with the information illustrated in Fig. 5 and an area of a field detected as being touched, in the touch field 31 (a contact area). The information illustrated in Fig. 5 indicates an extension ratio of the first length in relation to the contact area. Such a contact area may be, for example, an area of a user's finger or the like in contact with the touch field 31. A size of a finger varies by user. Further, such a contact area may become relatively large when a user wears a glove or a work glove.

When the contact area is small, a degree of freedom for movement of a touch position (movement of a finger) in the touch field 31 is large. In this case, a user is able to input a relatively large value as length information. In contrast, when the contact area is large, a degree of freedom for movement of a touch position (movement of a finger) in the touch field 31 is small. In this case, a user may have difficulty in inputting a relatively large value as length information. Thus, the input acceptance unit 13 according to the present exemplary embodiment increases an extension ratio when the contact area is large, compared with a case when the contact area is small.

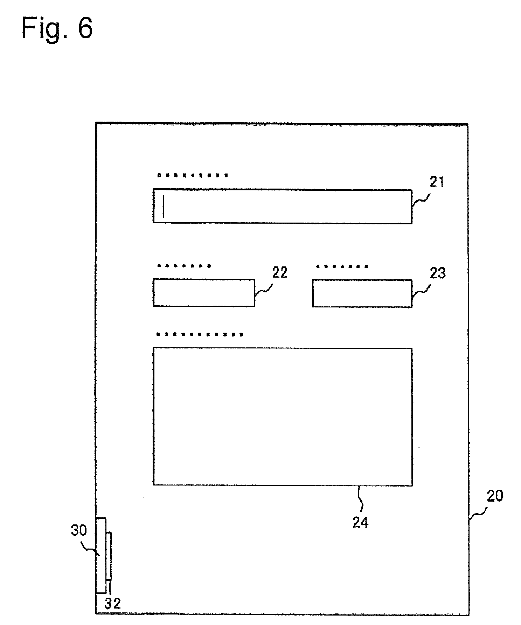

The touch field 31 may be called in response to a user operation instead of being continuously displayed on the touch panel display 20. For example, when accepting a user operation of hiding the touch field 31 (e.g. an operation of dragging an operation target 32 of a touch field calling component 30, to a leftward direction) with the touch field 31 being displayed as illustrated in Fig. 4, the display unit 11 may hide the touch field 31 as illustrated in Fig. 6. With this, visibility of the input screen is improved. Then, when accepting a user operation of calling the touch field 31 (e.g. an operation of dragging the operation target 32 of the touch field calling component 30 in a rightward direction) with the touch field 31 being hidden as illustrated in Fig. 6, the display unit 11 may display the touch field 31 as illustrated in Fig. 4.

The display positions of the touch field calling component 30 and the touch field 31 in Figs. 4 and 6 are merely an example. The display unit 11 may display the touch field calling component 30 and the touch field 31 at any location along the circumference of the touch panel display 20. For example, the display unit 11 may be configured to enable the display position to be changed through a user operation (e.g. a drag operation).

The present exemplary embodiment described above is able to provide an effect similar to the first and second exemplary embodiments.

Further, the electronic device 10 according to the present exemplary embodiment is capable of accepting at least one of direction information and length information through a touch operation on the touch field 31 displayed along the circumference of the touch panel display 20. In this case, a user is able to perform an efficient operation of performing an input operation on a focused input field with one hand while performing the operation of changing a focus position with another hand holding the touch panel display 20. Consequently, user operability is improved and efficiency enhancement of user input work is expected.

### <Fourth exemplary embodiment>

An electronic device according to the present exemplary embodiment is based on a configuration according to the first to third exemplary embodiments. An electronic device 10 according to the present exemplary embodiment is different from the first to third exemplary embodiments in that the display is not a touch panel display, and a user input is accepted via a keyboard and a mouse. An example of a functional block diagram of the electronic device 10 according to the present exemplary embodiment is illustrated in Fig. 2, similarly to the first to third exemplary embodiments.

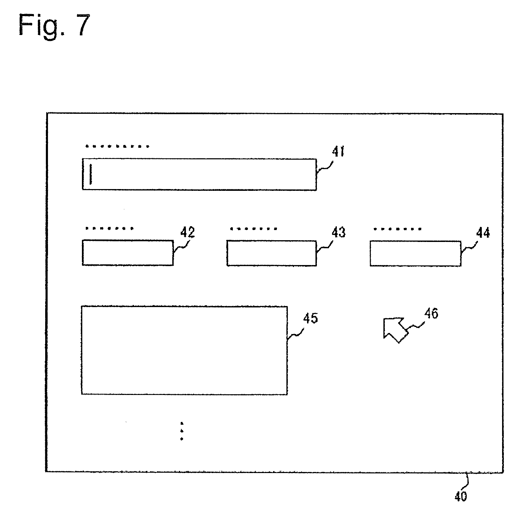

The display unit 11 displays, on a display, an input screen including a plurality of focus targets on which focus is alternatively placed. Fig. 7 illustrates an example of an input screen displayed on a display 40 by the display unit 11. The input screen includes a plurality of input fields 41 to 45. Further, the display unit 11 displays a cursor 46 overlapped on the input screen.

The input acceptance unit 13 accepts at least one of direction information and length information via the mouse and the keyboard. For example, the input acceptance unit 13 may accept at least one of direction information and length information through an operation of moving the cursor 46. In this case, direction information indicating a direction in which the cursor 46 moves is created. Also length information indicating a distance in which the cursor 46 moves is created. As another example, the input acceptance unit 13 may accept at least one of direction information and length information through an operation of moving the cursor 46 while keeping a predetermined operation (e.g. left-clicking the mouse, or pressing down a predetermined button on the keyboard). In this case, direction information indicating a direction in which the cursor 46 moves, while keeping the predetermined operation, is created. Also, length information indicating a distance in which the cursor 46 moves, while keeping the predetermined operation, is created.

A configuration of the focus position determination unit 12 is similar to the first and third exemplary embodiments.

The present exemplary embodiment described above is able to provide an effect similar to the first and third exemplary embodiments.

Examples of reference exemplary embodiments will be described as Supplemental Notes below. The aforementioned exemplary embodiments and modifications made thereto may also be described in whole or part as the following Supplemental Notes. However, the present invention exemplified in the aforementioned exemplary embodiments and modifications made thereto are not limited to the following.

### (Supplemental Note 1)

An electronic device including:
display means for displaying, on a display, an input screen including a plurality of focus targets that are able to be alternatively focused;
focus position determination means for determining which focus target, among a plurality of the focus targets, to be focused; and
input acceptance means for accepting input of direction information indicating a direction, wherein,
the focus position determination means changes a focus position from a first focus target to another focus target, in accordance with the direction information, when the input acceptance means accepts input of the direction information with focus placed on the first focus targets,.

### (Supplemental Note 2)

The electronic device according to Supplemental Note 1, wherein
the focus position determination means changes the focus position to another focus target located ahead of the first focus target in a direction indicated by the direction information on the input screen.

### (Supplemental Note 3)

The electronic device according to Supplemental Note 1 or 2, wherein
the input acceptance means accepts input of length information indicating a length, in addition to the direction information, and
when the input acceptance means accepts input of the direction information and the length information with the focus targets being focused, the focus position determination means changes the focus position from the first focus target to another focus targets, in accordance with the direction information and the length information.

### (Supplemental Note 4)

The electronic device according to Supplemental Note 3, wherein
the focus position determination means changes a focus position to another focus targets of which distance from the first focus target is close to a length indicated by the length information, among the other focus targets located ahead of the first focus target in a direction indicated by the direction information on the input screen.

### (Supplemental Note 5)

The electronic device according to any one of Supplemental Note 1 to 4, wherein
the display is a touch panel display, and
the input acceptance means accepts input of the direction information through a touch operation in a predetermined partial area along a circumference of the touch panel display.

### (Supplemental Note 6)

The electronic device according to Supplemental Note 3 or 4, wherein
the display is a touch panel display, and
the input acceptance means accepts input of the direction information and the length information through a touch operation in a predetermined partial area along a circumference of the touch panel display.

### (Supplemental Note 7)

The electronic device according to Supplemental Note 6, wherein,
when accepting an input operation of sliding a touch position by a first length in the predetermined area, the input acceptance means accepts input as the length information indicating a second length obtained by extending the first length, in accordance with a predetermined rule.

### (Supplemental Note 8)

The electronic device according to Claim 7, wherein
the input acceptance means changes a degree of extension of the first length depending on a size of an area of touch within the predetermined area.

### (Supplemental Note 9)

A method for controlling an electronic device by a computer, the method comprising:
a displaying step of displaying, by the computer, on a display, an input screen including a plurality of focus targets that are able to be alternatively focused;
a focus position determination step of determining, by the computer, which focus target, among a plurality of the focus targets, to be focused; and
an input acceptance step of accepting input of direction information indicating a direction, wherein,
the focus position determination step comprises changing a focus position from a first focus target to another focus target, in accordance with the direction information, when the input acceptance means accepts input of the direction information with the first focus target being focused.

### (Supplemental Note 9-2)

The method for controlling an electronic device according to Supplemental Note 9, wherein
the focus position determination step further includes changing the focus position to another focus target located ahead of the first focus target in a direction indicated by the direction information on the input screen.

### (Supplemental Note 9-3)

The method for controlling an electronic device according to Supplemental Note 9 or 9-2, wherein
the input acceptance step further includes accepting input of length information indicating a length, in addition to the direction information, and
the focus position determination step further includes changing the focus position from the first focus target to another focus targets, in accordance with the direction information and the length information, when accepting input of the direction information and the length information with the focus targets being focused, in the input acceptance step.

### (Supplemental Note 9-4)

The method for controlling an electronic device according to Supplemental Note 9-3, wherein
the focus position determination step further includes changing a focus position to another focus targets of which distance from the first focus target is close to a length indicated by the length information, among the other focus targets located ahead of the first focus target in a direction indicated by the direction information on the input screen.

### (Supplemental Note 9-5)

The method for controlling an electronic device according to any one of Supplemental Note 9 to 9-4, wherein
the display is a touch panel display, and
the input acceptance step further includes accepting input of the direction information through a touch operation in a predetermined partial area along a circumference of the touch panel display.

### (Supplemental Note 9-6)

The method for controlling an electronic device according to Supplemental Note 9-3 or 9-4, wherein
the display is a touch panel display, and
the input acceptance step further includes accepting input of the direction information and the length information through a touch operation in a predetermined partial area along a circumference of the touch panel display.

### (Supplemental Note 9-7)

The method for controlling an electronic device according to Supplemental Note 9-6, wherein
the input acceptance step further includes, when accepting an input operation of sliding a touch position by a first length in the predetermined area, accepting input as the length information indicating a second length obtained by extending the first length, in accordance with a predetermined rule.

### (Supplemental Note 9-8)

The method for controlling an electronic device according to Supplemental Note 9-7, wherein
the input acceptance step further includes changing a degree of extension of the first length depending on a size of an area of touch within the predetermined area.

### (Supplemental Note 10)

A computer program allowing a computer to function as:
display means for displaying, on a display, an input screen including a plurality of focus targets that are able to be alternatively focused;
focus position determination means for determining which focus target, among a plurality of the focus targets, to be focused; and
input acceptance means for accepting input of direction information indicating a direction, wherein,
the focus position determination means changes a focus position from a first focus target to another focus target, in accordance with the direction information, when the input acceptance means accepts input of the direction information with the first focus target being focused.

### (Supplemental Note 10-2)

The computer program according to Supplemental Note 10, wherein the program allows the computer further to function as:
the focus position determination means for changing the focus position to another focus target located ahead of the first focus target in a direction indicated by the direction information on the input screen.

### (Supplemental Note 10-3)

The computer program according to Supplemental Note 10 or Supplemental Note 10-2, wherein the program allows the computer further to function as:
the input acceptance means for accepting input of length information indicating a length, in addition to the direction information; and
the focus position determination means for changing the focus position from the first focus target to another focus targets, in accordance with the direction information and the length information, when the input acceptance means accepts input of the direction information and the length information with the focus targets being focused.

### (Supplemental Note 10-4)

The computer program according to Supplemental Note 10-3, wherein the program allows the computer further to function as:
the focus position determination means for changing a focus position to another focus targets of which distance from the first focus target is close to a length indicated by the length information, among the other focus targets located ahead of the first focus target in a direction indicated by the direction information on the input screen.

### (Supplemental Note 10-5)

The computer program according to any one of Supplemental Note 10 to 10-4,
wherein the display is a touch panel display, and
wherein the program allows the computer further to function as:
the input acceptance means for accepting input of the direction information through a touch operation in a predetermined partial area along a circumference of the touch panel display.

### (Supplemental Note 10-6)

The computer program according to Supplemental Note 10-3 or Supplemental Note 10-4,
wherein the display is a touch panel display, and
wherein the program allows the computer further to function as:
the input acceptance means for accepting input of the direction information and the length information through a touch operation in a predetermined partial area along a circumference of the touch panel display.

### (Supplemental Note 10-7)

The computer program according to Supplemental Note 10-6, wherein the program allows the computer further to function as:
the input acceptance means for, when accepting an input operation of sliding a touch position by a first length in the predetermined area, accepting input as the length information indicating a second length obtained by extending the first length, in accordance with a predetermined rule.

### (Supplemental Note 10-8)

The computer program according to Supplemental Note 10-7, wherein the program allows the computer further to function as:
the input acceptance means for changing a degree of extension of the first length depending on a size of an area of touch within the predetermined area.

The present invention has been described with the aforementioned exemplary embodiments as exemplary examples. However, the present invention is not limited to the aforementioned exemplary embodiments. In other words, various embodiments that can be understood by those skilled in the art may be applied to the present invention, within the scope thereof.

This application claims priority based on Japanese Patent Application No. 2013-194996 filed on September 20, 2013, the disclosure of which is hereby incorporated by reference thereto in its entirety.

### [Reference signs List]

- 1A: CPU
- 2A: RAM
- 3A: ROM
- 4A: Display control unit
- 5A: Display
- 6A: Operation acceptance unit
- 7A: Operation unit
- 8A: Bus
- 10: Electronic device
- 11: Display unit
- 12: Focus position determination unit
- 13: Input acceptance unit
- 20: Touch panel display
- 21: Input field
- 22: Input field
- 23: Input field
- 24: Input field
- 30: Touch field calling part
- 31: Touch field
- 32: Operation target
- 40: Display
- 41: Entry item
- 42: Entry item
- 43: Entry item
- 44: Entry item
- 45: Entry item
- 46: Cursor

## Claims

1. An electronic device comprising:
display means for displaying, on a display, an input screen including a plurality of focus targets that are able to be alternatively focused;
focus position determination means for determining which focus target, among a plurality of the focus targets, to be focused; and
input acceptance means for accepting input of direction information indicating a direction, wherein,
the focus position determination means changes a focus position from a first focus target to another focus target, in accordance with the direction information, when the input acceptance means accepts input of the direction information with the first focus target being focused.

2. The electronic device according to Claim 1, wherein
the focus position determination means changes the focus position to another focus target located ahead of the first focus target in a direction indicated by the direction information on the input screen.

3. The electronic device according to Claim 1 or 2, wherein
the input acceptance means accepts input of length information indicating a length, in addition to the direction information, and
when the input acceptance means accepts input of the direction information and the length information with the focus targets being focused, the focus position determination means changes the focus position from the first focus target to another focus targets, in accordance with the direction information and the length information.

4. The electronic device according to Claim 3, wherein
the focus position determination means changes a focus position to another focus targets of which distance from the first focus target is close to a length indicated by the length information, among the other focus targets located ahead of the first focus target in a direction indicated by the direction information on the input screen.

5. The electronic device according to any one of Claims 1 to 4, wherein
the display is a touch panel display, and
the input acceptance means accepts input of the direction information through a touch operation in a predetermined partial area along a circumference of the touch panel display.

6. The electronic device according to Claim 3 or 4, wherein
the display is a touch panel display, and
the input acceptance means accepts input of the direction information and the length information through a touch operation in a predetermined partial area along a circumference of the touch panel display.

7. The electronic device according to Claim 6, wherein,
when accepting an input operation of sliding a touch position by a first length in the predetermined area, the input acceptance means accepts input as the length information indicating a second length obtained by extending the first length, in accordance with a predetermined rule.

8. The electronic device according to Claim 7, wherein
the input acceptance means changes a degree of extension of the first length depending on a size of an area of touch within the predetermined area.

9. A method for controlling an electronic device by a computer, the method comprising:
displaying, by the computer, on a display, an input screen including a plurality of focus targets that are able to be alternatively focused; and
determining by the computer, which focus target, among a plurality of the focus targets, to be focused, when accepting input of direction information indicating a direction with a first focus target being focused, by changing a focus position from the first focus target to another focus targets, in accordance with the direction information.

10. A computer-readable storage medium recording a program that causes a computer to execute:
processing of displaying, on a display, an input screen including a plurality of focus targets that are able to be alternatively focused; and
processing of determining which focus target, among a plurality of the focus targets, to be focused, when accepting input of direction information indicating a direction with a first focus target being focused, by changing a focus position from the first focus target to another focus targets, in accordance with the input direction information.
